# EUROPEAN PATENT SPECIFICATION

(11) **EP 2 904 869 B1**
(45) Date of publication and mention of the grant of the patent: **13.01.2021**
(21) Application number: 12770125.8
(22) Date of filing: 08.10.2012
(51) Int. Cl.: H04W 76/25

(54) **METHODS, DEVICES, AND COMPUTER PROGRAM PRODUCTS FOR KEEPING DEVICES ATTACHED WITHOUT A DEFAULT BEARER**
VERFAHREN, VORRICHTUNGEN UND COMPUTERPROGRAMMPRODUKTE ZUM VERBINDEN VON VORRICHTUNGEN OHNE DEFAULT-TRÄGER
PROCÉDÉS, DISPOSITIFS, ET PRODUITS-PROGRAMMES INFORMATIQUES POUR MAINTENIR DES DISPOSITIFS ATTACHÉS SANS SUPPORT PAR DÉFAUT

(43) Date of publication of application: 12.08.2015
(73) Proprietor: Nokia Solutions and Networks Oy, 02610 Espoo (FI)
(72) Inventor: HURTTA, Tuija Helena, FIN-02660 Espoo (FI)
(74) Representative: Nokia EPO representatives
(86) International application number: PCT/EP2012/069871
(87) International publication number: WO 2014/056523

(56) References cited:
- HUAWEI ET AL: "Transfer and update solution of small data transfer by SMS", 3GPP DRAFT; S2-122897, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Barcelona, Spain; 20120709 - 20120713, 3 July 2012 (2012-07-03), XP050633419, [retrieved on 2012-07-03]
- "3rd Generation Partnership Project; Technical Specification Group Services and System Aspects; Machine-Type and other Mobile Data Applications Communications Enhancements (Release 12)", 3GPP STANDARD; 3GPP TR 23.887, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.2.1, 14 August 2012 (2012-08-14), pages 1-32, XP050649020, [retrieved on 2012-08-14]
- "3rd Generation Partnership Project; Technical Specification Group Core Network and Terminals; Non-Access-Stratum (NAS) protocol for Evolved Packet System (EPS); Stage 3 (Release 11)", 3GPP STANDARD; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V11.4.0, 19 September 2012 (2012-09-19), pages 1-341, XP050649477, [retrieved on 2012-09-19]
- HUAWEI ET AL: "Solution for the small data bearer service without using user plane RABs", 3GPP DRAFT; S2-122896, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Barcelona, Spain; 20120709 - 20120713, 3 July 2012 (2012-07-03), XP050633418, [retrieved on 2012-07-03]
- AT&T ET AL: "WID for Architectural Enhancement to EPS to support large number of devices with optional 'always-on' IP connectivity req", 3GPP DRAFT; S2-123344, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Barcelona, Spain; 20120709 - 20120713 13 July 2012 (2012-07-13), XP050683064, Retrieved from the Internet: URL:http://www.3gpp.org/ftp/tsg_sa/WG2_Arc h/TSGS2_92_Barcelona/Docs/ [retrieved on 2012-07-13]
- HUAWEI: "TR24.801 - A particular abnormal case in Attach procedure", 3GPP DRAFT; C1-080071, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Puerto Vallarta, Mexico; 20080118, 18 January 2008 (2008-01-18), XP050027480, [retrieved on 2008-01-18]

## Description

### FIELD OF THE INVENTION

The present invention relates to devices, methods and computer program products in relation to mobile communication. In particular, it relates to those devices, methods and computer program products concerning packet-based communication.

Prior art is disclosed in document Huawei et al., 3GPP DRAFT; S2-122897, 3 July 2012, describing a transfer and update solution of small data transfer by SMS, as well as in document 3rd Generation Partnership Project; Technical Specification Group Services and system Aspects, 3GPP TR 23.887; 14 August 2012; describing Machine-Type and other Mobile Applications Communications Enhancements (Release 12), as well as in document 3rd Generation Partnership Project, Technical Specification Group Core Network and Terminals 3GPP TS 24.301; 19 September 2012; describing Non-Access-Stratum (NAS) protocol for Evolved Packet System (EPS); Stage 3 (Release 11).

### BACKGROUND

Mobile communication architectures can be categorized as cellular network and ad-hoc network. In a cellular network such as Long Term Evolution (LTE), Universal Mobile Telecommunications System (UMTS), Global System for Mobile Communications (GSM), or the like, communication between mobile devices is routed via one or more core network elements.

The present specification generally relates to the use of bearers and the control of a configuration of a bearer allocation. Generally, for the purpose of the present specification, a bearer may refer to a connectivity service, e. g. a packet-based connectivity service such as Internet Protocol (IP)-based connectivity service, between two termination points. In cellular access, a bearer exists between a user equipment UE and a gateway such as e. g. a Packet Data Network Gateway (PGW). In this regard, terms like "endpoint" or "termination point" may be used. The termination point may be the user equipment, the PGW or the like. The term "termination point" is used in view of current 3GPP terminology, while the term "termination point" as used herein is to be understood to be equivalent to the term "endpoint" or any equivalent term. A termination point may be defined by an IP address and a transport layer port such as an UDP/SCTP/TCP port (L4 address/port), while it may also use further information such as for example GTP-U TEIDs. In 3rd Generation Partnership Project (3GPP™) system environment, a bearer provides the needed transport service for higher layers.

Accordingly, while specific reference is made hereinafter to a 3GPP, or especially a Long Term Evolution (LTE) or Long Term Evolution - advanced (LTE-A) system environment, such reference is made for explanatory purposes by way of example only. The principles described herein are generally applicable for any kind of bearer and any kind of bearer setup irrespective of the underlying system environment.

Conventionally, a bearer such as a transport bearer is set up by using a single termination point available at each end element of the bearer, i.e. with a fixed bearer setup configuration. In the case of setup of a S1 bearer in a LTE/LTE-A system environment, i. e. a user plane bearer on the S1 interface between evolved Node_B (eNB) and Serving Gateway (SGW) of a network entity, such S1 bearer is setup using a single IP address representing the termination point at the IP layer at the eNB and a single IP address at the IP layer representing the termination point at the SGW.

Especially, in a LTE environment providing an Evolved Packet System (EPS), the current principle is that there is always one default bearer which may additionally accompanied by one or more dedicated bearers when a user equipment (UE) is attached to the EPS, or connectivity such as Packet Data Network (PDN) connectivity is provided between the user equipment and the PDN, respectively. A single PDN connection currently contains one default bearer and zero or more dedicated bearers. The term "attached" means that the EPS is aware of the user equipment UE and reserves resources for the user equipment UE, such as the default bearer, as long as it is attached in order to allow communication anytime during attachment.

One concern is that a lot of bearers which need to be supported for millions of M2M devices must be provided, when the M2M devices are each attached to EPS with a default bearer. A Gateway (GW) capacity can be overrun, resulting in failure of connectivity of some user equipments UE. Moreover, operators concern about vendors pricing their Gateways (GW) based on the number of bearers. Reduction of bearers, e. g. when fewer bearers are active, could result in reduction of costs.

The whole LTE/EPS system has been designed so that each attached user equipment UE is assumed to have at least one default bearer, e. g. when PDN connectivity is provided between the user equipment UE and the PGW. As an example, a Mobility Management Entity (MME) of the LTE/EPS system always starts signaling with the Signaling Gateway (SGW) / Packet Data Network (PDN) Gateway (PGW) during an initial attach procedure for a user equipment UE. As another example, starting default bearer / PDN connection release from the PGW, e. g. due to inactivity timer expiry, causes the user equipment UE getting detached from EPS if there is no default bearer for the user equipment UE.

Hence, it is an object of the invention to improve mobile communication, especially, when plenty of user equipments need to be maintained as "attached" to the network.

### SUMMARY

The present invention relates to a terminal endpoint device, a network entity, a system, corresponding methods and computer program products as set forth in claims 1, 7, 11 and 13-17. Further embodiments are set forth in the dependent claims. According to a first (apparatus related) aspect of the invention, there is provided an apparatus, comprising a control module configured to cause requesting an attached status, in which the apparatus is communicatively attached to another apparatus, control a transceiver which is capable of communicating with the other apparatus via a medium by use of a basic bearer allocated by the other apparatus in the attached status, cause generating a basic bearer operating information to be transmitted by the transceiver, the basic bearer operating information indicating that the apparatus is adapted to stay attached without a basic bearer allocation, and cause the transceiver to transmit the basic bearer operating information to the other apparatus.

The apparatus may be provided as a hardware circuitry, e. g. such as implementations in analog and/or digital circuitry, a processing system, such as a computer and a program being run on the computer in order to work together to cause the apparatus to perform the required functions, combinations thereof or the like. As such, the apparatus may be established as a semiconductor chip, hardware circuitry or combinations thereof. Consequently, the same can be applied to the control module. The apparatus can be a user equipment or a portion thereof.

The other apparatus may be a network entity or a potion thereof, such as e. g. a eNB, a PGW, a MME, a PDN, combinations thereof, or the like.

Preferably, the control module is integral with the apparatus. However, it may also be a separate component which is connected electrically with the apparatus.

According to an exemplary embodiment, the control module can request an attached status, in which the apparatus is communicatively attached to another apparatus, or a detached status, in which the apparatus is communicatively detached from the other apparatus. The other apparatus may be a network entity component, such as the PDN or the like. The attached status can be achieved by the transceiver of the apparatus transmitting an attach request signal which is operated by the network entity. In response, the other apparatus, e. g. the entity, allocates a basic bearer to the apparatus requesting attachment. During attachment, communication between the apparatus and the entity can be provided anytime. So, communication can be established over the basic bearer such as a communication session.

The control module can also request detachment. Upon this request, the entity may retransmit an acknowledge signal and release the allocated resources, especially, the allocated basic bearer. In the detached status, a communication, such as a communication session, where user-related data is transmitted, is not possible.

According to an aspect, a basic bearer represents a communication channel of a communication medium such as radio, ultrasonic, light, e. g. infrared light or the like. The transceiver is adapted to the medium over which signals are to be transmitted. Consequently, the bearer can be a single frequency or a single wave length, a frequency range or wave length range, or band, respectively, a time slot, a phase, combinations thereof, or the like. Moreover, the bearer may be a code such as an Internet Protocol (IP) or the like. During attachment, the basic bearer allows to provide communication between the apparatus and the other apparatus which may be the entity or the like.

A further exemplary embodiment refers to a device comprising a transceiver, and an apparatus mentioned before, wherein the apparatus is preferably electrically connected with the transceiver. The connection may also be provided optically or combinatorially. The device can be a user equipment such as a mobile device, a laptop, a palm, or the like. The device can have a housing, in which the apparatus mentioned before can be arranged. The device can have a user interface, such as a keyboard, a monitor, a touch screen, or the like. Moreover, the device may include an energy module for providing power supply to the device, such as a battery, a power supply pack, or the like.

According to a second (apparatus related) aspect of the invention, there is provided an apparatus, comprising a control module configured to control a transceiver which is capable of communicating with another apparatus via a medium by use of a basic bearer allocated to the other apparatus in an attached status, in response to a request signal of the other apparatus, cause an attached status of the other apparatus, in which the other apparatus is communicatively attached to the apparatus, detect a receipt of a basic bearer operating information of the other apparatus by the transceiver, in the attached status, detect a disconnection condition, and, responsive thereto, cause release of the basic bearer allocated to the other apparatus while keeping the other apparatus attached.

In the second aspect, the apparatus may be provided as a hardware circuitry, e. g. such as implementations in analog and/or digital circuitry, a processing system, such as a computer and a program being run on the computer in order to work together to cause the apparatus to perform the required functions, combinations thereof or the like. As such, the apparatus may be established as a semiconductor chip, hardware circuitry or combinations thereof. Consequently, the same can be applied to the control module. The apparatus may be a network entity or a potion thereof, such as e. g. a eNB, a PGW, a MME, a PDN, combinations thereof, or the like. In turn, the other apparatus may be a user equipment or a portion thereof.

Preferably, the control module can be integral with the apparatus. However, it may also be a separate component which is connected electrically with the apparatus. As mentioned above, the transceiver is preferably adapted to operate with the medium by use of a suited bearer. In response to a request of the other apparatus, the control module provides an attached status of the other apparatus, in which the other apparatus is communicatively attached to the apparatus, or a detached status of the other apparatus, in which the other apparatus is communicatively detached from the apparatus. This can be achieved by an attach status information related to the other apparatus that may be stored in a memory module of the apparatus or a further allocated device. The information can be data related to the other device, a flag indicating the other device, or the like. The attach status preferably corresponds to a request of the other device.

The control module causes the transceiver to provide a basic bearer allocated to the other apparatus in the attached status. In response hereto, the transceiver may setup a basic bearer which is allocated to the other apparatus. The control module further detects a receipt of a basic bearer operating information of the other apparatus by the transceiver. The basic bearer operating information of the other apparatus indicates to the apparatus that the other apparatus is adapted to stay in the attached status independent from providing a basic bearer, especially, when the basic bearer is not more allocated to the other apparatus that is, the basic bearer is released. Consequently, in the attached status, when the communication is idle without data transfer, the control module causes to release the basic bearer and maintain the other apparatus attached.

A further exemplary embodiment refers to a device comprising a transceiver, and an apparatus mentioned before, wherein the apparatus is preferably electrically connected with the transceiver. The connection may also be provided optically or combinatorially. The device can be an entity such as a LTE/LTE-A system environment. The device can include more than one apparatus as mentioned before dependent on the area to be covered and/or the number of the other apparatuses to be attached.

According to a third (device-related) aspect, there is provided a device, comprising at least two apparatuses as mentioned before, wherein the apparatuses are communicatively connected with each other, wherein the control modules of the at least two apparatuses are configured to establish a mobility procedure related to another apparatus attached to one of the apparatuses upon request of the other apparatus, and wherein the control modules of the at least two apparatuses are configured to transfer a basic bearer operating information of the other apparatus from the apparatus, to which the other apparatus is attached, to the apparatus requested.

In the third aspect, the at least two apparatuses may be components of an entity that provides a cellular environment. The device may form a network entity, whereas the apparatuses may be a potion thereof, such as e. g. a eNB, a PGW, a MME, a PDN, combinations thereof, or the like. In turn, the other apparatus may be a user equipment or a portion thereof. The device allows another apparatus to stay attached independent from a connectivity status, that is, the allocation of a basic bearer, even during a mobility procedure from a first apparatus of the device to a second apparatus of the device. The mobility procedure may be requested by the other apparatus, wherein the other apparatus may transmit a mobility request to the apparatus to which the other apparatus is attached. So, the attached status without basic bearer can be enabled over the complete cellular environment.

According to a fourth (method-related) aspect, there is provided a method, comprising:
causing requesting an attached status, in which an apparatus is communicatively attached to another apparatus, controlling a transceiver which is capable of communicating with the other apparatus via a medium by use of a basic bearer allocated by the other apparatus in the attached status, causing generating a basic bearer operating information to be transmitted by the transceiver, the basic bearer operating information indicating that the apparatus is adapted to stay attached without a basic bearer allocation, and causing the transceiver to transmit the basic bearer operating information to the other apparatus. The apparatus may be a control module of a user equipment, a complete user equipment, or the like. The control module can be configured to perform the method. The other apparatus may be a network entity such as at least one of an eNB, a PGW, a PDN, a MME, combinations thereof, or the like.

According to a fifth (method-related) aspect, there is provided a method, comprising: controlling a transceiver of an apparatus which is capable of communicating with another apparatus via a medium by use of a basic bearer allocated to the other apparatus in an attached status, in response to a request signal of the other apparatus, causing an attached status of the other apparatus, in which the other apparatus is communicatively attached to the apparatus, detecting a receipt of a basic bearer operating information of the other apparatus by the transceiver, in the attached status, detecting a disconnection condition, and responsive thereto, causing release of the basic bearer allocated to the other apparatus while keeping the other apparatus attached. Here, the apparatus may be a network entity such as at least one of an eNB, a PGW, a PDN, a MME, combinations thereof, or the like. The other apparatus may be a user equipment or a portion thereof such as a control module.

According to a sixth (method-related) aspect, there is provided a method, comprising: providing at least two apparatuses according to anyone of the claims 7 through 10, wherein the apparatuses are communicatively connected with each other; establishing between control modules of the at least two apparatuses a mobility procedure related to another apparatus attached to one of the apparatuses upon request of the other apparatus; and transferring a basic bearer operating information of the other apparatus from the apparatus, to which the other apparatus is attached, to the apparatus requested. The apparatuses may be portions of a network entity such as at least one of an eNB, a PGW, a PDN, a MME, combinations thereof, or the like. The other apparatus may be a user equipment or a portion thereof such as a control module.

According to a seventh aspect of the present invention, there are provided one or more computer program product(s) comprising computer-executable components which, when the program is run on a computer, are configured to carry out the respective method(s) as referred herein above.

The above computer program product may further comprise computer-executable components which, when the program is run on a computer, perform the method aspects mentioned above in connection with the method aspects.

The above computer program product/products may be embodied as a computer-readable storage medium.

Various further aspects of at least some exemplary embodiments of the aspects of the invention are set out in the respective dependent claims.

Some aspects of the invention provide the advantage that a present hardware implementation of the mobile device and the entity can be widely maintained so that cost and performance implementation solution can be small. Moreover, the status of being attached becomes independent from allocating a basic bearer. So, the apparatus may be attached to the other apparatus even if the basic bearer is released so that it is not more allocated to the apparatus. If a communication session is terminated and/or no further data transmission is required, e. g. when the communication is idle without data transfer, the apparatus may indicate this to the other apparatus which releases the basic bearer. If the apparatus signals to the other apparatus that the communication is terminated, whereas maintaining the status of being attached at the same time, the other apparatus will maintain the apparatus attached and release the basic bearer for other appliances. So, the invention allows saving resources, especially, it allows improving performance of a communication environment, such as a cellular environment. The number of attached user equipments can exceed the number of the basic bearers. E. g., resources can be saved if EPS attach is allowed without a basic bearer.

Although embodiments of the invention will be explained exemplary in the following with reference to LTE, the invention is not restricted to LTE but may also be applied to other communication environments as will become apparent from the description of the embodiments.

### BRIEF DESCRIPTION OF THE DRAWINGS

The teachings of the present invention can be readily understood and at least some additional specific details will appear by considering the following detailed description of at least some exemplary embodiments in conjunction with the accompanying drawings, in which:
Figure 1 schematically shows a signaling flow of a conventional initial attach procedure which, when modified in at least some aspects, represents an exemplary embodiment of the invention;
Figure 2 schematically depicts a signaling flow for a connectivity procedure for a user equipment attached which, when modified in at least some aspects, represents a further exemplary embodiment of the invention;
Figure 3 schematically depicts a signaling flow for a disconnection procedure for a user equipment attached which, when modified in at least some aspects, represents another exemplary embodiment of the invention;
Figure 4 schematically depicts a signaling flow for an entity initiated bearer deactivation which, when modified in at least some aspects, represents still another exemplary embodiment of the invention;
Figure 5 schematically depicts a signaling flow for a tracking area update which, when modified in at least some aspects, represents an additional exemplary embodiment of the invention;
Figure 6 shows an exemplary embodiment of a user equipment according to certain embodiments of the invention; and
Figure 7 shows an exemplary embodiment of an entity operable according to the invention.

### DETAILED DESCRIPTION OF THE EMBODIMENTS

Without limiting the scope of the invention to the embodiments, the invention is illustrated in more detail by the following description referring to the accompanying drawings.

References to certain standards, media and/or resources in this description are rather supposed to be exemplary for the purpose of illustration of the invention in order to improve the ease of understanding of the invention. They are not to be understood as limiting the inventive concept. Likewise, the language as well as terms used herein such as e. g. signal names, device names and the like, are to demonstrate the embodiments only. Use of such language or terms apart from their understanding according to this disclosure shall not be applied to the invention for the purpose of limiting its scope.

Generally, mobile devices may be user equipments (UE) such as cellular phones, smart phones, laptop's, handhelds, tablets, vehicles, or the like.

Although wireless communication is usually established via radio as a transmission resource, it may also be applied to ultrasonic, infrared light or the like as transmission resource.

Herein below, however, exemplary aspects of the invention will be described with reference to radio communication as wireless communication, e. g. in a LTE environment. In this regard, the basic bearer can be a default bearer such as used in the LTE system.

Various devices and apparatuses are involved in exemplary embodiments and will be described below.

In the following, a bearer setup is discussed. It is possible for the PGW to initiate the activation of dedicated bearers as part of the attach procedure or as part of the user equipment UE requested PDN connectivity procedure over E UTRAN. However, the result of the dedicated bearer activation procedure is separate from the attach procedure, meaning that the result of the attach procedure is not dependent on whether the dedicated bearer activation procedure succeeds or not. On the other hand, the dedicated bearer activation may only be regarded as successful if the attach procedure completes successfully.

Generally, in order to request initial attach, a user equipment UE transmits a RRC connection request to an eNB. The eBN returns a RRC connection setup. In response, the user equipment UE completes the RRC connection setup and transmits an attach request and PDN connectivity attach request to the eNB. In turn, the eNB submits the attach request and PDN connectivity attach request of the user equipment UE to the MME. The MME responds with a bearer setup request and a PDN connectivity accept to the eNB. Especially, the MME may signal an attach accept including the PDN connectivity accept to the eNB. In response, the eNB sets up a basic bearer such as a default bearer and provides a RRC connection reconfiguration to be transmitted to the user equipment UE. The user equipment UE responds with a RRC connection reconfiguration to be received by the eNB. Finally, the eNB submits a bearer setup response to the MME.

Moreover, subscription information of the user equipment UE is stored in the Home Subscriber Server (HSS) / Home Location Register (HLR). The subscription information may be enhanced to indicate whether "EPS attach without default bearer" is allowed for the user equipment UE and/or APN. This way, an operator can control whether a default bearer is created for the user equipment UE and/or APN at attach. The MME validates requests coming from the user equipment UE such as e. g. attach request, against the subscription information. As an example, the user equipment UE may indicate "EPS attach without default bearer" capability but the subscription information may indicate that a default bearer has to be created at attach. This may be done e. g. for certain services such as IMS services requiring an always-on default bearer.

Firstly, terminal-related aspects of exemplary embodiments are described.

According to an embodiment of the invention, the user equipment UE can inform the network, e.g. an element in the radio access network or element in the core network, that an EPS attach without a default bearer creation is supported by the user equipment UE. Moreover, a network node can inform another network node, e. g. the eNB informing the MME, the MME informing the eNB, the old MME informing the new MME, when mobility happens, the MME informing the SGW/PGW, or the like that the user equipment UE has the capability to be EPS attached without default bearer. This information is needed by the network nodes as much functionality is assumed to change. Changes for user equipments UE having the capability to be EPS attached without default bearer are to be provided e. g. in the Mobility Management (MM) procedures, Session Management (SM) procedures, or Radio Resource Control (RRC) procedures.

In order to support EPS attach without default bearer for a user equipment UE, the capabilities in network nodes need to be taken into account, too. As an example, if the user equipment UE and MME support EPS attach without default bearer but the eNB is not upgraded to support this, the eNB assumes that default bearer creation happens as part of the initial attach procedure. If default bearer creation does not happen, the eNB which is not upgraded sees this as an error because mandatory parameters, e.g. UE-AMBR calculated by the MME based on default bearer information, are missing when the MME signals with the eNB.

A certain application may provide for LTE environment that is challenging from communication point of view. However, similar wireless communication environments may also be affected so that the following may be applied to other environments such as LTE-A, UMTS, or the like, too.

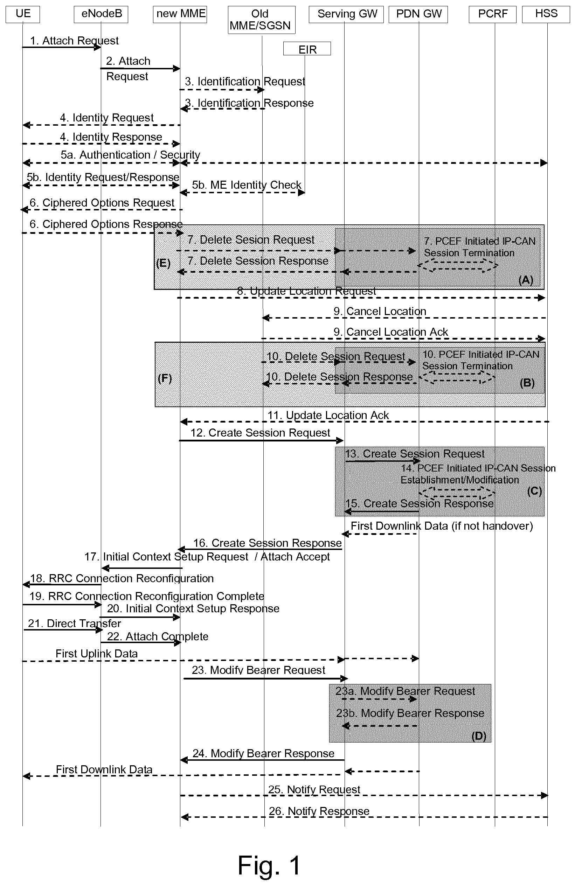

According to an aspect of the invention, the network needs to know whether the user equipment UE supports EPS attach without default bearer creation. Consequently, it is proposed that the user equipment UE signals with the network whether it supports and requests EPS attach without default bearer. The user equipment UE does this during an initial attach procedure as shown in Fig. 1.

The "EPS attach without basic bearer" information can be sent by adding new value(s) to existing information element(s) in user equipment UE - MME signaling or adding a new information element/flag in user equipment UE - MME signaling. The "EPS attach without basic bearer" information can also be sent in a user equipment UE - eNB signaling by adding one or more new values to existing information elements or adding a new information element and/or flag, respectively. Especially, the "EPS attach without basic bearer" information can be provided by a basic bearer operating information such as a default bearer operating information. This basic bearer operating information may be a separate signal. However, it also may be a signal incorporated by e. g. the user equipment UE - eNB signaling or the like. This basic bearer operating information can be provided e.g. when attach or mobility happens or when the user equipment UE requests an additional PDN connection. The solution is preferably to be backwards compatible as network nodes may not be upgraded to support the EPS attach without basic bearer functionality.

Here are examples how the user equipment UE may send the "EPS attach without basic bearer" information when sending Attach Request:
1) add a new value "EPS attach without basic bearer" in EPS Attach Type;
2) add new values "EPS attach without basic bearer not supported" or "EPS attach without basic bearer supported" in user equipment UE Network Capability;
3) Attach Request contains a mandatory ESM Message Container with which the user equipment UE signals to the network information elements for a basic bearer creation. The user equipment UE has to fill in the mandatory information elements. The user equipment UE may indicate support and request for EPS attach without basic bearer when sending PDN Connectivity Request in ESM Message Container, e.g. by adding a new "EPS attach without basic bearer" flag. The benefit of this alternative is that the MME can proceed with the initial attach procedure even if the MME is not upgraded to support the EPS attach without basic bearer functionality.
4) The user equipment UE may not include ESM Message Container in Attach Request. The MME does accept Attach Request without ESM Message Container only if the MME is upgraded to support the EPS attach without basic bearer functionality. If the MME is not upgraded to support the EPS attach without basic bearer functionality, the MME rejects Attach Request without ESM Message Container and thus the user equipment UE needs to perform attach again by adding ESM Message Container to attach request.
5) add a new flag or information element to indicate "EPS attach without basic bearer" in the attach request.

The user equipment UE may also send the "EPS attach without basic bearer" information, or basic bearer operating information, respectively, to the eNB when performing EPS attach. This can be done by adding new value(s) to existing information elements or adding a new information element / flag in RRC signaling. The eNB forwards the "EPS attach without basic bearer" information to the MME in S1 signaling when upgraded to support the EPS attach without basic bearer functionality.

Secondly, network entity-related aspects are described, e. g. with reference to a MME.

To accept EPS attach without basic bearer, the MME signals with the user equipment UE by sending an Attach Accept. The MME informs the user equipment UE that EPS attach without basic bearer was successful. Here are examples how the MME may inform the user equipment UE on successful EPS attach without basic bearer:
1) add a new value "EPS attach without basic bearer" in EPS Attach Result in Attach Accept.
2) not include ESM Message Container/Activate Default EPS Bearer Context Request in Attach Accept.
3) not include e. g. APN, PDN Address or EPS QoS if ESM Message Container/Activate Default EPS Bearer Context Request included in Attach Accept.
4) add a new flag or information element to indicate in Attach Accept that "EPS attach without basic bearer" was successful.

The MME may also inform the eNB that EPS attach without basic bearer was successful in S1 signaling. The eNB forwards this information to the user equipment UE in RRC signaling when upgraded to support the EPS attach without basic bearer functionality.

If the MME is not upgraded, EPS attach happens as today with basic bearer creation and thus the user equipment UE should be prepared for this.

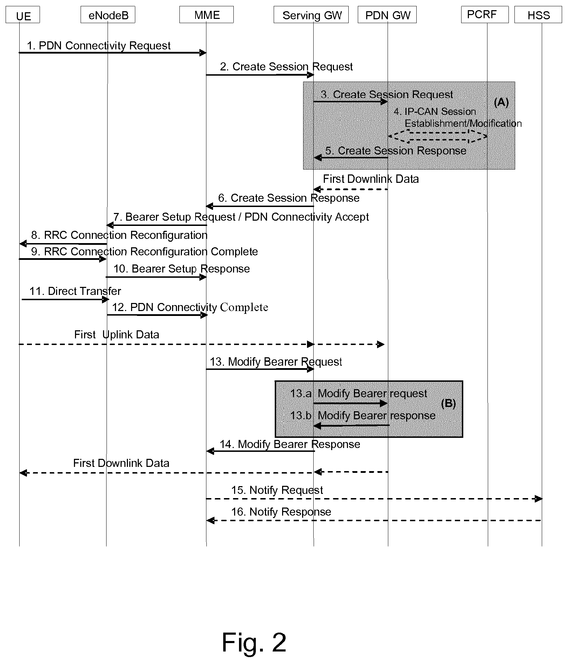

If the user equipment UE has signaled the "EPS attach without basic bearer" information during the initial attach procedure, the user equipment UE needs to start a PDN connectivity procedure when there is user data to be sent. During this procedure, the MME selects the SGW/PGW and starts signaling towards the SGW/PGW. The MME informs the SGW/PGW that EPS attach without basic bearer can be operated by the user equipment UE. The MME may do this as exemplary shown in figure 2.

Here are examples how the MME may inform the SGW/PGW that EPS attach without basic bearer functionality, or default bearer functionality, respectively, is supported for the user equipment UE and the PDN connection and/or the basic bearer, respectively:
1) add a new information element, e.g. EPS Attach Without Basic bearer Supported, in Create Session Request.
2) add a new value/flag in an existing information element, e.g. EPS Attach Without Basic bearer Supported in Indication Flags, in Create Session Request.

The response message, a Create Session Response, may also be enhanced to inform the counter part that the "EPS attach without basic bearer" information of the user equipment UE was successfully received and the SGW/PGW can perform functionality accordingly.

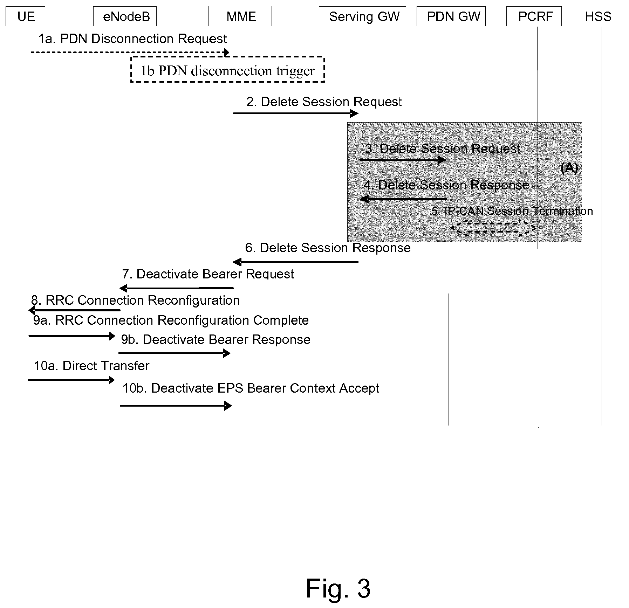

The EPS attach without basic bearer allows also the user equipment UE to start a basic bearer / PDN connection release without detaching the user equipment UE. This is e. g. shown in figure 3.

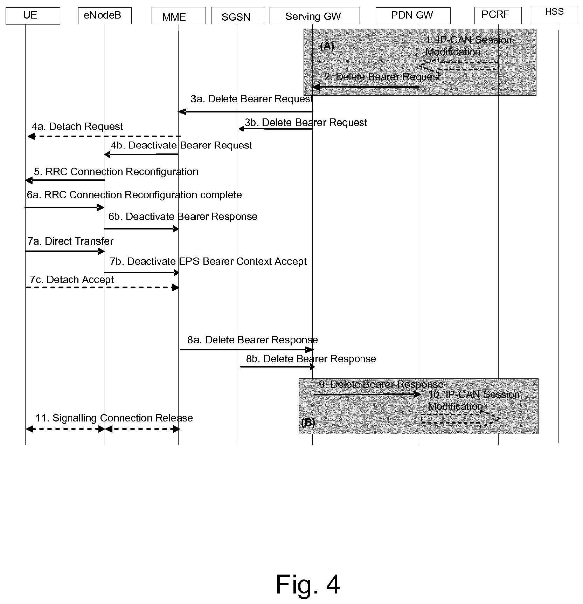

Regarding a LTE system, if the EPS attach without default bearer functionality is supported for the user equipment UE and the PDN connection and/or the default bearer, respectively, the PGW may perform certain functionality. As an example, the PGW may start default bearer / PDN connection release when an inactivity timer expires. As another example, the PGW may start default bearer / PDN connection release when a service stop is detected, e. g. by DPI functionality. An operator can configure whether or not the default bearer / PDN connection release is started from the PGW. This is shown e. g. in figure 4. The PGW can start default bearer / PDN connection release, e.g. due to inactivity timer expiry or when detecting service stop, e.g. by DPI functionality. This can be a disconnection condition. If the PGW starts this procedure without knowing whether the EPS attach without default bearer functionality is supported for the UE user equipment and the PDN connection and/or the default bearer, respectively, this procedure commonly results in detaching the user equipment UE which is not preferred. Information currently available in the PGW is not considered to be sufficient to determine whether or not the UE gets detached, e.g. APN, IMSI, IMEI.

The user equipment UE may move from one MME to another. The old MME may inform the new MME that EPS attached without basic bearer functionality is supported for the user equipment UE and/or the PDN connection and/or the basic bearer, respectively, e. g. in a Context Response, Forward Relocation Request signaling messages, or the like. For instance, the old MME may give this information to the new MME per user equipment UE instead of the user equipments UE PDN connection and/or basic bearer. The old MME may inform the new MME e.g. by adding new value(s) to existing information elements or by adding a new information element / flag in relevant signaling messages. If mobility may happen, all MMEs in the operator network are preferred to be upgraded before supporting the EPS attach without basic bearer functionality in the operator network. As an example, if the old MME is upgraded and the new MME is not upgraded, the new MME will not accept a user equipment UE without basic bearer.

EPS attach without basic bearer may impact also the eNB. For the system to work properly, the MME preferably knows whether the eNB supports EPS attach without basic bearer. The eNB could inform the MME whether it supports the EPS attach without basic bearer functionality. This may happen e.g. when the eNB communicates with the MME for setup purposes, during the initial attach procedure or as part of mobility when the user moves from the old eNB to the new eNB. It is also possible that the MME knows by configuration whether the eNB supports EPS attach without basic bearer. If mobility may happen, it is preferred that all eNBs in the operator network are upgraded before supporting the EPS attach without basic bearer functionality in the operator network.

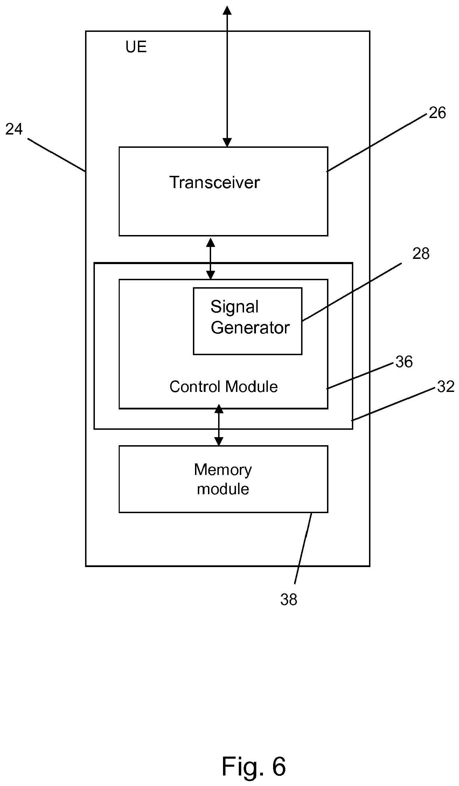

Fig. 6 depicts an exemplary embodiment of a device 24 as a user equipment UE comprising a transceiver 26 and an apparatus 32, wherein the apparatus 32 is communicatively connected with the transceiver 26. In this embodiment, this connection is electrically. The transceiver 26 is adapted to provide a communication link via radio as a medium with another device, which will be discussed later on. The medium can also be another one, such as light, ultrasonic or the like. The device 24 further includes a memory module 38 which is electrically connected with the apparatus 32.

In this embodiment, the apparatus 32 realized as a semiconductor chip that is arranged in the device 24. The apparatus 32 includes a control module 36 which is configured to request an attached status, in which the apparatus 32 is communicatively attached to another apparatus, or a detached status, in which the apparatus 32 is communicatively detached from the other apparatus. Only in the attached status, a communication link can be established between the device 24 and the other apparatus. The device 24 is a mobile device such as a smart phone or the like. However, it can be also a palm, a laptop, a cellular phone or the like. The control module 36 can be a portion of the semiconductor chip of the apparatus 24 in order to provide the necessary functionality. However, the control module can also be provided by a hardware circuitry, a processing unit, combinations thereof, or the like. Although the control module 36 of this embodiment is integral with the apparatus 24, it can also be provided as a separate component which is electrically connected with the apparatus 24.

The control module 36 controls the transceiver 26 which is enabled to communicate with the other apparatus 22 via radio as medium by use of a basic bearer allocated by the other apparatus 22. The basic bearer provides the communication channel in order to establish physical connectivity so as to establish a communication link. In the attached status, when the communication is idle without data transfer, the control module 35 maintains the attached status independent from provision of the basic bearer. So, if no data is transferred, the channel capacity of the basic bearer can be released and serve for other communication purposes. Consequently, the control module 36 is configured to maintain the attached status independent from provision of the basic bearer, when the communication is idle without data transfer in the attached status.

The other apparatus 22 may be a network entity which can comprise a eNB, a MME, a PGW, a PDN, and/or the like. Preferably, the MME may initiate a basic bearer setup, wherein the basic bearer setup results in the basic bearer being provided between the apparatus 32 and the PGW of the other apparatus 22.

The control module 36 is configured to cause requesting an attached status, in which the apparatus is communicatively attached to another apparatus, or a detached status, in which the apparatus is communicatively detached from the other apparatus. Moreover, the control module 36 is configured to control the transceiver 26 which is capable of communicating with the other apparatus 22 via radio as a medium by use of a basic bearer allocated by the other apparatus 22 in the attached status. Additionally, the control module 36 is configured to cause generating a basic bearer operating information to be transmitted by the transceiver, the basic bearer operating information indicating that the apparatus 32 is adapted to stay attached without a basic bearer allocation, and to cause the transceiver 26 to transmit the basic bearer operating information to the other apparatus 22.

The control module 36 can be configured to perform the method, comprising: causing requesting an attached status, in which an apparatus 32 is communicatively attached to another apparatus 22, controlling a transceiver 26 which is capable of communicating with the other apparatus 22 via radio as a medium by use of a basic bearer allocated by the other apparatus 22 in the attached status, causing generating a basic bearer operating information to be transmitted by the transceiver 26, the basic bearer operating information indicating that the apparatus 32 is adapted to stay attached without a basic bearer allocation, and causing the transceiver 26 to transmit the basic bearer operating information to the other apparatus 22.

According to a further aspect, the control module 36 is further configured to generate a basic bearer operating information to be transmitted by the transceiver 26, the basic bearer operating information containing information related to a requirement for provision of the basic bearer. The basic bearer operating information can contain information that the device 24 is capable of maintaining attached even without providing the basic bearer. The basic bearer operating information may be generated by a generating unit 28 of the control module 36. Moreover, the control module 36 causes the transceiver 26 to transmit the basic bearer operating information to the other apparatus 22. The basic bearer operating information can be a signal. This signal can be included by other signals such as e. g. attach request or the like.

The control module 36 may perform a method, comprising: maintaining the attached status independent from provision of the basic bearer, when the communication is idle without data transfer in the attached status.

According to another aspect, the control module 36 is further configured to cause generating an attach request signal requesting the attached status that incorporates said basic bearer operating information. This allows providing information about the basic bearer requirement to the other apparatus 22 during an attach initiated request. The control module 36 may also perform a method, comprising: causing generating an attach request signal requesting the attached status that incorporates said basic bearer operating information.

Another aspect teaches that the control module 36 detects the control module is further configured to detect, whether a basic bearer is required further in the attached status, when the communication is idle without data transfer, and cause disconnecting from the other apparatus while maintaining attached. Detection may be provided automatically so that no external adjustment is required. The control module 36 may further perform a method, comprising: detecting, whether a basic bearer is required further in the attached status, when the communication is idle without data transfer, and causing disconnecting from the other apparatus 22 while maintaining attached.

According to a further aspect, control module 36 is configured to release the basic bearer during the attached status, when the communication is idle without data transfer. The control module 36 may cause the transceiver 26 to transmit corresponding information to the other apparatus 22.

According to another aspect, the control module 36 is configured to cause connecting to the other apparatus during the attached status. This can be provided by a connectivity request signal transmitted to the other apparatus. The control module 36 may further perform a method, comprising: causing connecting to the other apparatus 22 during the attached status.

It is also an aspect of the invention that the control module 36 is further configured to detect receipt of a message container by the transceiver 26, /cause to add the basic bearer operating information to the message container, and cause the transceiver 26 to retransmit the message container. The control module 36 may further perform a method, comprising: detecting receipt of a message container by the transceiver 26, causing to add the basic bearer operating information to the message container, and causing the transceiver 26 to retransmit the message container.

According to another aspect, the control module 36 is further configured to start a data transfer by starting a connectivity procedure. The connectivity procedure can be executed by a respective circuitry or processing unit of the control module 36.

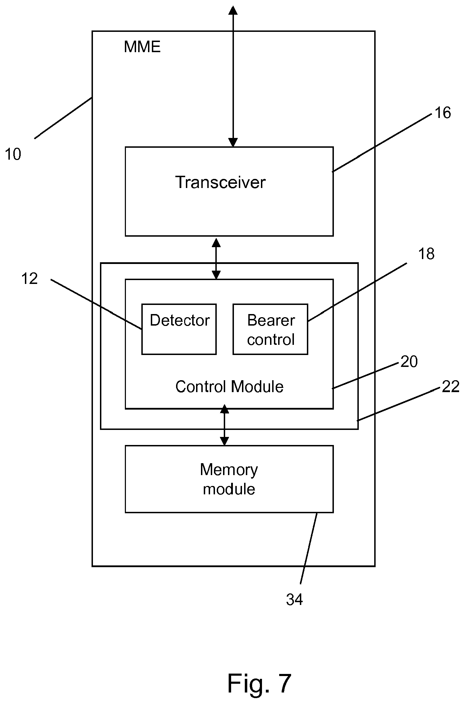

Fig. 7 depicts a device 10, such as an entity, comprising a transceiver 16 and an apparatus 22, wherein the apparatus 22 is preferably electrically connected with the transceiver 16. The device 10 can be a network entity or one or more components thereof such as an eNB, MME, SGW, PGW, SGSN, PCRF, combinations thereof, or the like.

The apparatus 22 comprises a control module 20 configured to control a transceiver 16 which is capable of communicating with another apparatus 32 via radio as a medium by use of a basic bearer allocated to the other apparatus 32 in an attached status, in response to a request signal of the other apparatus 32, cause an attached status of the other apparatus 32, in which the other apparatus 32 is communicatively attached to the apparatus 22, or a detached status, in which the other apparatus 32 is communicatively detached from the apparatus 22, detect a receipt of a basic bearer operating information of the other apparatus 32 by the transceiver 16, in the attached status, detect a disconnection condition, and responsive thereto, cause release of the basic bearer allocated to the other apparatus 32 while keeping the other apparatus 32 attached.

According to an aspect, the control module 20 is configured to control the transceiver 16 which is enabled to communicate with another apparatus 32 via radio by use of a bearer. In response to a request of the other apparatus 32, the control module 20 is configured to provide an attached status of the other apparatus 32, in which the other apparatus 32 is communicatively attached to the apparatus 22, or a detached status of the other apparatus 32, in which the other apparatus 32 is communicatively detached from the apparatus 22. Status information can be stored in a memory module 34 that is electrically connected with the apparatus 22. The memory module 34 is arranged inside of the device 10.

The control module 20 is configured to cause the transceiver 16 to provide a basic bearer allocated to the other apparatus 32 in the attached status. The basic bearer allows establishing a communication link between the apparatuses 22, 32. The control module 20 is configured to detect a receipt of a basic bearer operating information of the other apparatus 32 by the transceiver 16, and, responsive thereto, in the attached status, when the communication is idle without data transfer, to release the basic bearer and maintain the other apparatus 32 attached. So, the other apparatus 32 can easily establish a communication link anytime without providing an attach procedure. At the same time, in the idle status as a disconnection condition, the basic bearer can be released to provide further channel capacity, e. g. for other devices, or apparatuses, respectively.

The control module 20 may be configured to perform a method, comprising: controlling a transceiver 16 of an apparatus 22 which is capable of communicating with another apparatus 32 via radio as a medium by use of a basic bearer allocated to the other apparatus 32 in an attached status, in response to a request signal of the other apparatus 32, causing an attached status of the other apparatus 32, in which the other apparatus 32 is communicatively attached to the apparatus 22, detecting a receipt of a basic bearer operating information of the other apparatus 32 by the transceiver 16, in the attached status, detecting a disconnection condition, and, responsive thereto, causing release of the basic bearer allocated to the other apparatus 32 while keeping the other apparatus 32 attached.

According to an aspect, the control module 20 is further configured to generate a basic bearer operating acknowledge signal in response to detecting receipt of a basic bearer operating information of the other apparatus 32, and to cause the transceiver 16 to transmit the basic bearer operating acknowledge signal to the other apparatus 32. Upon receipt of the basic bearer operating acknowledge signal, the other apparatus 32 can maintain the attached status if no data transfer is provided.

In one exemplary embodiment, the control module 22 is further configured to detect receipt of an attach request signal of the other apparatus 32, and to determine whether the attach request signal contains the basic bearer operating information. Already at the beginning of an attachment procedure, the apparatus 22 has the information, whether the other apparatus 32 is capable of maintained attached with basic bearer. Corresponding operation procedures can be adopted.

The control module 20 may be further configured to perform a method, comprising: in response to detecting receipt of a basic bearer operating information of the other apparatus 32, generating a basic bearer operating acknowledge signal, and causing the transceiver 16 to transmit the basic bearer operating acknowledge signal to the other apparatus 32. This may enable to inform the other apparatus 32 that attach independent from provision of a basic bearer is accepted by the apparatus 22.

A further aspect teaches that the control module is configured to setup a basic bearer upon detecting a session request signal of the other apparatus 32 by the transceiver 16. The control module 20 may be also configured to perform a method, comprising: detecting receipt of an attach request signal of the other apparatus 32, and determining whether the attach request signal contains the basic bearer operating information.

Another aspect provides that the control module is further configured to modify the basic bearer. So, communication between the apparatuses 22, 32 can be enhanced.

Fig. 7 further depicts a bearer control 18 which control allocation of a bearer to another apparatus such as the apparatus 32. The bearer control 18 is controlled by the control module 20. It may be integral with the control module 20 but it also may be a separate component connected with the control module 20. If appropriate, the bearer control 18 may be in direct communication with the transceiver 16.

The control module 20 may be configured to perform a method, comprising:
setting up a basic bearer allocated to the other apparatus 32 upon detecting a connectivity request signal of the other apparatus 32 by the transceiver 16. During being attached, a communication link can be established by allocating a basic bearer to the other apparatus 32.

A further aspect of the invention relates to a device, comprising at least two apparatuses 22, wherein the apparatuses 22 are communicatively connected with each other, wherein the control modules 20 of the at least two apparatuses 22 are configured to establish a mobility procedure related to another apparatus 32 attached to one of the apparatuses 22 upon request of the other apparatus 32, and wherein the control modules 20 of the at least two apparatuses 22 are configured to transfer a basic bearer operating information of the other apparatus 32 from the apparatus22, to which the other apparatus 32 is attached, to the apparatus 22 requested. So, a tracking area update can be provided independent from having a basic bearer allocated to the other apparatus 32. The other apparatus 32 maintains attached continuously.

Figs. 1 to 5 show signaling flows for different procedures which, when modified in at least some aspects, represents exemplary embodiments of the invention, wherein the entities involved are located in an upper portion of the Figs. 1 to 5 in horizontal direction. Processing performed is assigned to the vertical direction of these drawings.

### 1. Initial attach procedure

Figure 1 schematically shows a signaling flow of a conventional initial attach procedure which, when modified in at least some aspects, represents an exemplary embodiment of the invention. In the following, only the differences for performing an aspect of the inventive concept are further detailed. The signaling flow is based on 3GPP 23.401 and describes an initial attach procedure. The following embodiments are examples of the current procedure for EPS attach without default bearer as a basic bearer.

According to an aspect, the user equipment UE signals "EPS attach without default bearer" in step 1 as a default bearer operating information included by the attach request signal as indicated in Fig. 1. The default bearer operating information is transmitted to the MME as other apparatus 22 together with the attach request signal. The MME receives the default bearer operating information in step 2. In step 2, the eNB also signals to the MME whether it supports EPS attach without default bearer or the MME determines this itself based on configuration. Also, the MME may store information on whether EPS attach without default bearer is possible for the user equipment UE. The MME does not start signaling towards the SGW/PGW. The MME does not perform default bearer creation functionality, e. g. calculation of UE-AMBR. As default bearer creation does not happen during the initial attach procedure, e. g. no IP address gets allocated to the user equipment UE. Thus Attach Accept at step 17 towards the user equipment UE needs to be enhanced as it cannot contain e. g. APN, PDN Address or EPS QoS information elements as currently. The Attach Accept is carried inside an Initial Context Setup Request on the S1 and also the Initial Context Setup Request is enhanced so as to contain not e. g. User Equipment Aggregated Maximum Bit Rate (UE-AMBR) or EUTRAN Radio Access Bearers (E-RAB) information elements. So, the user equipment UE gets attached to the EPS without requiring a default bearer.

### 2. Connectivity procedure for apparatus attached

Turning now to Fig. 2 schematically depicting a signaling flow for a connectivity procedure for a user equipment attached which, when modified in at least some aspects, represents a further exemplary embodiment of the invention. In this embodiment, a connectivity procedure for a user equipment attached is described, wherein the signaling flow is also based on 3GPP 23.401 and describes the current user equipment UE requesting a PDN connectivity procedure. This exemplary embodiment employs the current procedure for an EPS attach without default bearer. The MME knows whether EPS attach without default bearer is possible for the user equipment UE. The MME signals towards the SGW/PGW that EPS attach without default bearer is possible for the user equipment UE and the PDN connection and/or the default bearer, respectively (steps 2 and 3). This allows the SGW/PGW to perform certain functionality which are currently not performed in the LTE access, such e. g. default bearer / PDN connection release from the PGW. The SGW/PGW may inform the PCRF that EPS attach without default bearer is possible for the user equipment and PDN connection / default bearer. This allows the user equipment UE to provide for connection to the EPS while already attached. A complete attachment procedure can be avoided. In the connection procedure, a PDN connection and/or a default bearer may be allocated to the user equipment UE only.

### 3. Disconnection procedure for apparatus attached

Fig. 3 deals with a disconnection of the PDN connection and/or the default bearer caused by the user equipment UE. Consequently, Fig. 3 shows a signaling flow for a disconnection procedure for a user equipment attached which, when modified in at least some aspects, represents another exemplary embodiment of the invention. The signaling flow above is based on 3GPP 23.401 again and describes the current user equipment UE requesting a PDN disconnection procedure. This procedure is used to release the last default bearer / PDN connection. The following feature can improve the current procedure for EPS attach without default bearer. The user equipment UE supporting EPS attach without default bearer is allowed to request release of the last default bearer / PDN connection. The MME knows from signaling from the user equipment UE or from the old MME whether the EPS attach without default bearer functionality is supported for the user equipment UE. If yes, the PDN Disconnection Request from the user equipment UE is allowed to proceed. The user equipment UE is thus allowed to release the last default bearer and/or PDN connection which is no longer needed for user data transfer. The user equipment UE remains EPS attached but without default bearer. So, the disconnection request of the user equipment, or apparatus, respectively, form a disconnection condition.

### 4. Entity initiated default bearer deactivation

Considering now Fig. 4 schematically depicting a signaling flow for an entity initiated bearer deactivation which, when modified in at least some aspects, represents still another exemplary embodiment of the invention. The signaling flow above is based on 3GPP 23.401 and describes the PGW initiated bearer deactivation procedure. Additionally provided is a procedure for EPS attach without default bearer. The PGW knows that the EPS attach without default bearer functionality is supported for the user equipment UE and the PDN connection and/or the default bearer. The PGW can start default bearer / PDN connection release e. g. when an inactivity timer expires or when service stop is detected. The operator is allowed to configure whether or not the PGW starts default bearer / PDN connection release in such events. So, the default bearer can be released during communication inactivity of the user equipment UE. So, the disconnection condition is provided by the entity itself, e. g. time out, priority shift, or the like. The disconnection condition provided by the entity may be bound to the default bearer being idle that is, not data transfer is established and/or expected. The user equipment UE remains EPS attached but without default bearer.

### 5. Tracking area update

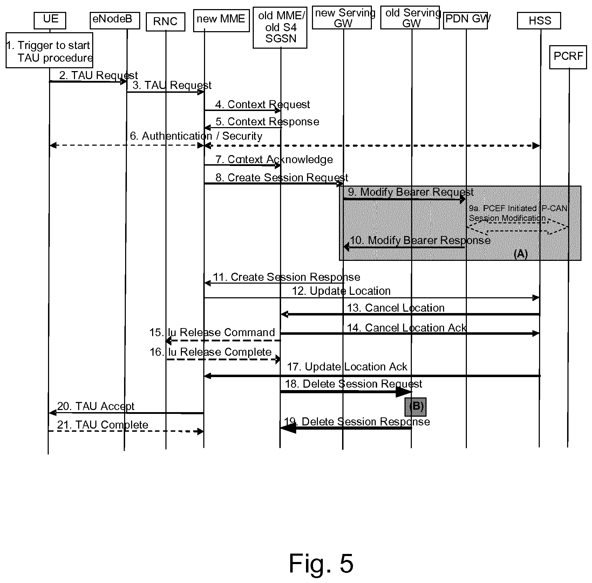

Referring now to Fig. 5 schematically depicting a signaling flow for a tracking area update which, when modified in at least some aspects, represents an additional exemplary embodiment of the invention. The signaling flow is based on 3GPP 23.401 and describes a tracking area update procedure. The following features are added to the current procedure for EPS attach without default bearer.

According to one exemplary embodiment, the user equipment UE signals "EPS attach without default bearer" in step 2. The MME receives this in step 3. In step 3, the eNB also signals to the MME whether it supports EPS attach without default bearer or the MME determines this itself based on configuration. The new MME retrieves information from the old MME as normally in steps 4, 5 and 7.

If the user equipment UE is EPS attached without default bearer, there is no bearer information. Only user equipment UE information is available. In this case, the new MME can skip signaling to the SGW/PGW because there are no bearers to be modified.

According to a further exemplary embodiment, the user equipment UE performs normal Tracking Area Update (TAU) signaling. In step 3, the eNB signals to the MME whether it supports EPS attach without default bearer or the MME determines this itself based on configuration. The new MME retrieves information from the old MME as normally in steps 4, 5 and 7. The old MME sends additional information in step 5 to the new MME indicating that the user equipment UE is capable of being EPS attach without default bearer.

If the user equipment UE is EPS attached without default bearer, there is no bearer information. Only user equipment UE information is available. The new MME can skip signaling to the SGW/PGW because there are no bearers to be modified. So, TAU can be provided by shifting information related to the default bearer operating information of the apparatus attached from one component of the entity to another component of the entity. So attachment of the apparatus attached can be remained during movement of the apparatus attached in the environment of the entity.

The tracking area update con be provided by a method, comprising: providing at least two apparatuses, wherein the apparatuses are communicatively connected with each other; establishing between control modules of the at least two apparatuses a mobility procedure related to another apparatus attached to one of the apparatuses upon request of the other apparatus; and transferring a default bearer operating information of the other apparatus from the apparatus, to which the other apparatus is attached, to the apparatus requested. The at least two apparatuses can be an eNB, a PGW, PDN, a MME, or the like, which are preferably portions of a network entity, combinations thereof or the like. The other apparatus may be a user equipment or portions thereof. Especially, there can be additionally provided a method, comprising: detecting whether the apparatus requested to mobility is capable to detect a default bearer operating information.

Embodiments of the present invention may be implemented in software, hardware, application logic or a combination of software, hardware and application logic. The software, application logic and/or hardware generally reside on control modules of terminal devices or network devices.

In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer or smart phone, or user equipment.

The present invention can advantageously be implemented in user equipments or smart phones, or personal computers connectable to such networks. That is, it can be implemented as or in chipsets to connected devices, and/or modems thereof. Moreover, the invention can be implemented in network components, e. g. components of network entities or the like, such as MME's, PGW's, SGW'S, eNB's, or the like.

As used in this application, the terms "unit", "module", "processing system", and "circuitry" refer to hardware-only circuit implementations, such as implementations in analog and/or digital circuitry or to combinations of circuits and software and/or firmware, such as e. g. a combination of processors or portions of processors/software including digital signal processors, software, and memories that work together to cause an apparatus, such as a mobile phone or server, to perform various functions and to circuits, such as a microprocessors or a portion of a microprocessors, that require software or firmware for operation, even if the software or firmware is not physically present.

As a further example, as used in this application, the terms "unit", "module", "processing system", and "circuitry" would also cover an implementation of merely a processor or multiple processors or portion of a processor and their accompanying software and/or firmware. The terms "unit", "module", "processing system", and "circuitry" would also cover a baseband integrated circuit or applications processor integrated circuit for a mobile phone or a similar integrated circuit in server, a cellular network device, or other network device.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims. The mobility procedure may be a handover similar to a handover according to the LTE system.

It is also noted herein that while the above describes example embodiments of the invention, these descriptions should not be viewed in a limiting sense. Rather, there are several variations and modifications which may be made without departing from the scope of the present invention as defined in the appended claims.

### List of acronyms:

- LTE:: Long Term Evolution
- UE:: user equipment
- UMTS:: Universal Mobile Telecommunications System
- GSM:: Global System for Mobile Communications
- 3GPP™:: 3rd Generation Partnership Project
- IP:: Internet Protocol
- UDP:: User Datagram Protocol
- SCTP:: Stream Control Transmission Protocol
- TCP:: Transmission Control Protocol
- GTP-U:: GPRS Tunneling Protocol
- TEID:: Tunnel Endpoint ID
- eNB:: evolved Node_B
- SGW:: Serving Gateway
- EPS:: Evolved Packet System (
- UE:: User equipment
- GW:: Gateway
- M2M:: machine-to-machine
- MME:: Mobility Management Entity
- PDN:: Packet Data Network
- PGW:: Packet Data Network Gateway
- ESM:: EPS Session Management
- MM:: Mobility Management
- SM:: Session Management
- APN:: Access Point Name
- QoS:: Quality of service
- DPI:: Deep Packet Inspection
- RRC:: Radio Resource Control
- AMBR:: Aggregated Maximum Bit Rate
- E-RAB:: EUTRAN Radio Access Bearers
- EUTRAN:: evolved UMTS Terrestrial Radio Access Network
- HSS:: Home Subscriber Server
- HLR:: Home Location Register
- IMS:: IP Multimedia Subsystem

## Claims

1. A terminal endpoint device (24), comprising:
a control module (36) configured to
cause requesting an attached status, in which the terminal endpoint device (24) is communicatively attached to a network entity (10),
control a transceiver (26) which is capable of communicating with the network entity (10) via a medium by use of a default bearer allocated by the network entity (10) in the attached status,
**characterized in that**
the control module (36) is further configured to
cause generating a default bearer operating information to be transmitted by the transceiver (26), the default bearer operating information indicating that the terminal endpoint device (24) is adapted to stay attached without a default bearer allocation,
cause the transceiver (26) to transmit the default bearer operating information to the network entity (10), and,
in the attached status, cause generating a disconnection request to be transmitted by the transceiver (26) to the network entity (10), the disconnection request indicating release of the default bearer allocated by the network entity (10) while maintaining the terminal endpoint device (24) attached.

2. The terminal endpoint device (24) according to claim 1, wherein the control module (36) is further configured to
maintain the attached status independent from provision of the default bearer, when the communication is idle without data transfer in the attached status.

3. The terminal endpoint device (24) according to claim 1 or 2, wherein the control module (36) is further configured to cause generating an attach request signal requesting the attached status that incorporates said default bearer operating information.

4. The terminal endpoint device (24) according to anyone of the claims 1 through 3, wherein the control module (36) is further configured to
detect, whether a default bearer is required further in the attached status, when the communication is idle without data transfer, and
cause disconnecting from the other apparatus (22) while maintaining attached.

5. The terminal endpoint device (24) according to anyone of the claims 1 through 3, wherein the control module (36) is configured to
cause connecting to the network entity (10) during the attached status.

6. The terminal endpoint device (24) according to anyone of the claims 2 through 5, wherein the control module (36) is further configured to
detect receipt of a message container by the transceiver (26),
cause to add the default bearer operating information to the message container, and
cause the transceiver (26) to retransmit the message container.

7. A network entity (10), comprising:
a control module (20) configured to
control a transceiver (16) which is capable of communicating with a terminal endpoint device (24) via a medium by use of a default bearer allocated to the terminal endpoint device (24) in an attached status,
in response to a request signal of the terminal endpoint device (24), cause an attached status of the terminal endpoint device (24), in which the terminal endpoint device (24) is communicatively attached to the network entity (10) and allocate the default bearer to the terminal endpoint device (24),
**characterized in that**
the control module (20) is further configured to
detect a receipt of a default bearer operating information of the terminal endpoint device (24) by the transceiver (16), wherein the default bearer operating information indicates that the terminal endpoint device (24) is adapted to stay attached without a default bearer allocation,
in the attached status, detect a disconnection request received from the terminal endpoint device and
responsive thereto, cause release of the default bearer allocated to the terminal endpoint device (24) while keeping the terminal endpoint device (24) attached.

8. The network entity (10) according to claim 7, wherein the control module (20) is further configured to
in response to detecting receipt of the default bearer operating information of the terminal endpoint device (24), generate a default bearer operating acknowledge signal, and
cause the transceiver (16) to transmit the default bearer operating acknowledge signal to the terminal endpoint device (24).

9. The network entity (10) according to claim 7 or 8, wherein the control module (20) is further configured to
detect receipt of an attach request signal of the terminal endpoint device (24), and
determine whether the attach request signal contains the default bearer operating information.

10. The network entity (10) according to anyone of the claims 7 through 9, wherein the control module (20) is further configured to
setup a default bearer allocated to the terminal endpoint device (24) upon detecting a connectivity request signal of the terminal endpoint device (22) by the transceiver (16).

11. A system, comprising:
a first network entity (10) according to anyone of the claims 7 through 10,
a second network entity (10) wherein the first network entity (10) and the second network entity (10) are communicatively connected with each other;
wherein the first network entity (10) is configured to, when mobility of a terminal endpoint device (24) attached to the first network entity (10) happens, upon the terminal endpoint device (24) requesting the second network entity (10), inform the second network entity (10) of a default bearer operating information of the terminal endpoint device (24).

12. The system according to claim 11, wherein the control module (20) of the first network entity (10), to which the terminal endpoint device (24) is attached, is configured to detect whether the second Z network entity (10) is capable to detect the default bearer operating information.

13. A method performed by a terminal endpoint device (24), comprising:
causing requesting an attached status, in which the terminal endpoint device (24) is communicatively attached to a network entity (10),
controlling a transceiver (26) of the terminal endpoint device (24) which is capable of communicating with the network entity (10) via a medium by use of a default bearer allocated by the network entity (10) in the attached status,
**characterized in that**
causing generating a default bearer operating information to be transmitted by the transceiver (26), the default bearer operating information indicating that the terminal endpoint device (24) is adapted to stay attached without a default bearer allocation, and
causing the transceiver (26) to transmit the default bearer operating information to the network entity (10),
in the attached status, causing generating a disconnection request to be transmitted by the transceiver (26) to the network entity (10), the disconnection request indicating release of the default bearer allocated by the network entity (10) while maintaining the terminal endpoint device (24) attached.

14. A method performed by a network entity, comprising:
controlling a transceiver (16) of the network entity (10) which is capable of communicating with a terminal endpoint device (24) via a medium by use of a default bearer allocated to the terminal endpoint device (24) in an attached status,
in response to a request signal of the terminal endpoint device (24), causing an attached status of the terminal endpoint device (24), in which the terminal endpoint device (24) is communicatively attached to the network entity (10) and allocating the default bearer to the terminal endpoint device (24),
**characterized in that**
detecting a receipt of a default bearer operating information of the terminal endpoint device (24) by the transceiver (16), wherein the default bearer operating information indicates that the terminal endpoint device (24) is adapted to stay attached without a default bearer allocation,
in the attached status, detecting a disconnection request received from the terminal endpoint device (24), and
responsive thereto, causing release of the default bearer allocated to the terminal endpoint device (24) while keeping the terminal endpoint device (24) attached.

15. A method performed by a system comprising:
a first network entity (10) performing the steps of claim 14 and a second network entity (10) wherein the first network entity (10) and the second network entity (10) are communicatively connected with each other;
wherein, when mobility of a terminal endpoint device (24) attached to the first network entity (10) happens, upon the terminal endpoint device (24) requesting the second network entity (10), the first network entity (10) informs the second network entity (10) of a default bearer operating information of the terminal endpoint device (24).

16. A computer program product, comprising a set of computer-executable instructions which, when the program is run on a terminal endpoint device (24), cause the terminal endpoint device (24) to perform the steps of:
causing requesting an attached status, in which the terminal endpoint device (24) is communicatively attached to a network entity (10),
controlling a transceiver (26) of the terminal endpoint device (24) which is capable of communicating with the network entity (10) via a medium by use of a default bearer allocated by the network entity (10) in the attached status,
**characterized in that**
it causes the system to further perform the steps of
causing generating a default bearer operating information to be transmitted by the transceiver (26), the default bearer operating information indicating that the terminal endpoint device (32) is adapted to stay attached without a default bearer allocation, and
causing the transceiver (26) to transmit the default bearer operating information to the network entity (10),
in the attached status, causing generating a disconnection request to be transmitted by the transceiver (26) to the network entity (10), the disconnection request indicating release of the default bearer allocated by the network entity (10) while maintaining the terminal endpoint device (24) attached.

17. A computer program product, comprising a set of computer-executable instructions which, when the program is run on a network entity (10), cause the network entity (10) to perform the steps of:
controlling a transceiver (16) of the network entity (10) which is capable of communicating with a terminal endpoint device (24) via a medium by use of a default bearer allocated to the terminal endpoint device (24) in an attached status,
in response to a request signal of the terminal endpoint device (24), causing an attached status of the terminal endpoint device (24), in which the terminal endpoint device (24) is communicatively attached to the network entity (10) and allocating the default bearer to the terminal endpoint device (24),
**characterized in that**
detecting a receipt of a default bearer operating information of the terminal endpoint device (24) by the transceiver (16), wherein the default bearer operating information indicates that the terminal endpoint device (24) is adapted to stay attached without a default bearer allocation,
in the attached status, detecting a disconnection request received from the terminal endpoint device (24), and
responsive thereto, causing release of the default bearer allocated to the terminal endpoint device (24) while keeping the terminal endpoint device (24) attached.

18. A computer program product, comprising a set of computer-executable instructions which, when the program is run on a system comprising a first network entity (10) and a second network entity (10) cause the first network entity (10) to perform the steps of claim 14 and further cause the first network entity (10) and the second network entity (10) to perform the steps of:
communicatively connecting with each other;
wherein, when mobility of a terminal endpoint device (24) attached to the first network entity (10) happens, upon the terminal endpoint device (24) requesting the second network entity (10), causing the first network entity (10) to inform the second network entity (10) of a default bearer operating information of the terminal endpoint device (24).

## Patentansprüche

1. Terminal-Endgerät (24) umfassend:
ein Steuermodul (36), das so konfiguriert ist, dass es
die Anforderung eines verbundenen Status bewirkt, bei dem das Terminal-Endgerät (24) kommunikativ mit einer Netzwerkeinheit (10) verbunden ist,
einen Empfänger (26) steuert, der in der Lage ist, über ein Medium unter Verwendung eines Default-Trägers mit der Netzwerkeinheit (10) zu kommunizieren, der von der Netzwerkeinheit (10) im verbundenen Status zugewiesen wird,
**dadurch gekennzeichnet, dass**
die Steuerung (36) ferner so konfiguriert ist, dass sie
das Erzeugen einer Default-Träger-Betriebsinformation bewirkt, die vom Empfänger (26) übertragen werden soll, wobei die Default-Träger-Betriebsinformation angibt, dass das Terminal-Endgerät (24) so angepasst ist, dass es ohne die Zuweisung eines Default-Trägers verbunden bleibt,
den Empfänger (26) veranlasst, die Default-Träger-Betriebsinformationen an die Netzwerkeinheit (10) zu übertragen, und
im verbundenen Status bewirkt, dass eine Trennungsanforderung erzeugt wird, die vom Empfänger (26) an die Netzwerkeinheit (10) übertragen wird, wobei die Trennungsanforderung die Freigabe des von der Netzwerkeinheit (10) zugewiesenen Default-Trägers angibt, während das Terminal-Endgerät (24) verbunden bleibt.

2. Terminal-Endgerät (24) nach Anspruch 1, wobei das Steuermodul (36) ferner so konfiguriert ist, dass es
den verbundenen Status unabhängig von der Bereitstellung des Default-Trägers beibehält, wenn die Kommunikation ohne Datentransfer im verbundenen Status inaktiv ist.

3. Terminal-Endgerät (24) nach Anspruch 1 oder 2, wobei das Steuermodul (36) ferner so konfiguriert ist, dass es die Erzeugung eines Verbindungs-Anforderungssignals bewirkt, das den verbundenen Status anfordert und das die Default-Träger-Betriebsinformationen enthält.

4. Terminal-Endgerät (24) nach einem beliebigen der vorstehenden Ansprüche 1 bis 3, wobei das Steuermodul (36) ferner so konfiguriert ist, dass es
erkennt, ob ein Default-Träger ferner im verbundenen Status benötigt wird, wenn die Kommunikation ohne Datenübertragung inaktiv ist, und
die Trennung von der anderen Vorrichtung (22) verursacht, während sie verbunden bleibt.

5. Terminal-Endgerät (24) nach einem beliebigen der vorstehenden Ansprüche 1 bis 3, wobei das Steuermodul (36) so konfiguriert ist, dass es
die Verbindung mit der Netzwerkeinheit (10) während des verbundenen Status bewirkt.

6. Terminal-Endgerät (24) nach einem beliebigen der vorstehenden Ansprüche 2 bis 5, wobei das Steuermodul (36) ferner so konfiguriert ist, dass es
den Empfang eines Message-Containers durch den Empfänger (26) erkennt,
das Hinzufügen der Default-Träger-Betriebsinformationen zum Message-Container bewirkt, und
den Empfänger (26) veranlasst, den Message-Container erneut zu übertragen.

7. Netzwerkeinheit (10), umfassend:
ein Steuermodul (20), das so konfiguriert ist, dass es einen Empfänger (16) steuert, der in der Lage ist, mit einem Terminal-Endgerät (24) über ein Medium unter Verwendung eines Default-Trägers zu kommunizieren, der dem Terminal-Endgerät (24) in einem verbundenen Status zugewiesen wird,
in Reaktion auf ein Anforderungssignal des Terminal-Endgeräts (24) einen verbundenen Status des Terminal-Endgeräts (24) bewirkt, in dem das Terminal-Endgerät (24) kommunikativ mit der Netzwerkeinheit (10) verbunden ist, und den Default-Träger dem Terminal-Endgerät (24) zuzuweisen,
**dadurch gekennzeichnet, dass**
das Steuermodul (20) ferner so konfiguriert ist, dass es
einen Empfang einer Default-Träger-Betriebsinformation des Terminal-Endgeräts (24) durch den Empfänger (16) erfasst, wobei die Default-Träger-Betriebsinformation angibt, dass das Terminal-Endgerät (24) angepasst ist, um ohne eine Default-Träger-Zuweisung verbunden zu bleiben, im verbundenen Status eine Trennungsanforderung erkennt, die vom Terminal-Endgerät empfangen wird, und
in Reaktion darauf die Freigabe des Default-Träger bewirkt, der dem verbundenen Terminal-Endgerät (24) zugewiesen wird, während das Terminal-Endgerät (24) verbunden bleibt.

8. Netzwerkeinheit (10) nach Anspruch 7, wobei das Steuermodul (20) ferner so konfiguriert ist, dass es
in Reaktion auf das Erkennen des Empfangs der Default-Träger-Betriebsinformationen des Terminal-Endgeräts (24), ein Default-Träger-Betriebsbestätigungssignal erzeugt, und
den Empfänger (16) veranlasst, das Default-Träger-Betriebsbestätigungssignal an das Terminal-Endgerät (24) zu übertragen.

9. Netzwerkeinheit (10) nach Anspruch 7 oder 8, wobei das Steuermodul (20) ferner so konfiguriert ist, dass es
den Empfang eines Verbindungs-Anforderungssignals des Terminal-Endgeräts (24) erkennt, und
bestimmt, ob das Verbindungs-Anforderungssignal die Default-Träger-Betriebsinformation enthält.

10. Netzwerkeinheit (10) nach einem beliebigen der vorstehenden Ansprüche 7 bis 9, wobei das Steuermodul (20) ferner so konfiguriert ist, dass es
beim Erkennen eines Konnektivitäts-Anforderungssignals des Terminal-Endgeräts (24) durch den Empfänger (16) einen dem Terminal-Endgerät (24) zugeordneten Default-Träger einrichtet.

11. System umfassend:
eine erste Netzwerkeinheit (10) nach einem beliebigen der vorstehenden Ansprüche 7 bis 10,
eine zweite Netzwerkeinheit (10),
wobei die erste Netzwerkeinheit (10) und die zweite Netzwerkeinheit (10) kommunikativ miteinander verbunden sind;
wobei die erste Netzwerkeinheit (10) so konfiguriert ist, dass sie, wenn Mobilität eines Terminal-Endgeräts (24) geschieht, das mit der ersten Netzwerkeinheit (10) verbunden ist, nach der Anforderung des Terminal-Endgeräts (24) an die zweite Netzwerkeinheit (10), die zweite Netzwerkeinheit (10) über eine Default-Träger-Betriebsinformation des Terminal-Endgeräts (24) informiert wird.

12. System nach Anspruch 11, wobei das Steuermodul (20) der ersten Netzwerkeinheit (10), mit dem das Terminal-Endgerät (24) angeschlossen ist, so konfiguriert ist, dass es erkennt, ob die zweite Netzwerkeinheit (10) in der Lage ist, die Default-Träger-Betriebsinformation zu erkennen.

13. Verfahren, das von einem Terminal-Endgerät (24) durchgeführt wird, umfassend:
das Anfordern eines verbundenen Status bewirken, in dem das Terminal-Endgerät (24) kommunikativ mit einer Netzwerkeinheit (10) verbunden ist,
das Steuern eines Empfängers (26) des Terminal-Endgeräts (24), das in der Lage ist, mit der Netzwerkeinheit (10) über ein Medium unter Verwendung eines von der Netzwerkeinheit (10) im verbundenen Status zugewiesenen Default-Trägers zu kommunizieren,
**dadurch gekennzeichnet, dass**
das Bewirken des Erzeugens einer Default-Träger-Betriebsinformation, die durch den Empfänger (26) übertragen werden soll, wobei die Default-Träger-Betriebsinformation, die angibt, dass das Terminal-Endgerät (24) angepasst ist, um ohne eine Zuweisung eines Default-Trägers verbunden zu bleiben, und
den Empfänger (26) veranlassen soll, die übertragen werden soll, wobei die Default-Träger-Betriebsinformation an die Netzwerkeinheit (10) im verbundenen Status zu übertragen, wodurch die Erzeugung einer Trennungsanforderung veranlasst wird, die vom Empfänger (26) an die Netzwerkeinheit (10) übertragen werden soll, wobei die Trennungsanforderung die Freigabe des von der Netzwerkeinheit (10) zugewiesenen Default-Trägers anzeigt, während das Terminal-Endgerät (24) verbunden bleibt.

14. Von einer Netzwerkeinheit durchgeführtes Verfahren umfassend:
Steuern eines Empfängers (16) der Netzwerkeinheit (10), der in der Lage ist, mit einem Terminal-Endgerät (24) über ein Medium durch Verwendung eines Default-Trägers zu kommunizieren, der dem Terminal-Endgerät (24) in einem verbundenen Status zugewiesen ist,
in Reaktion auf ein Anforderungssignal des Terminal-Endgeräts (24), was einen verbundenen Status des Terminal-Endgeräts (24) bewirkt, wobei das Terminal-Endgerät (24) kommunikativ mit der Netzwerkeinheit (10) verbunden ist und dem Terminal-Endgerät (24) den Default-Träger zuweist,
**dadurch gekennzeichnet, dass**
das Erkennen eines Empfangs einer Default-Träger-Betriebsinformation des Terminal-Endgeräts (24) durch den Empfänger (16), wobei die Default-Träger-Betriebsinformation angibt, dass das Terminal-Endgerät (24) angepasst ist, ohne die Zuweisung eines Default-Trägers verbunden bleibt,
im verbundenen Status Erkennen einer Trennungsanforderung, die vom Terminal-Endgerät (24) erhalten wird, und
in Reaktion darauf die Freigabe des Default-Trägers bewirkt, der dem verbundenen Terminal-Endgerät (24) zugewiesen wird, während das Terminal-Endgerät (24) verbunden bleibt.

15. Verfahren, das von einem System durchgeführt wird, umfassend:
eine erste Netzwerkeinheit (10), die die Schritte nach Anspruch 14 durchführt, und eine zweite Netzwerkeinheit (10),
wobei die erste Netzwerkeinheit (10) und die zweite Netzwerkeinheit (10) kommunikativ miteinander verbunden sind
wobei, wenn Mobilität eines Terminal-Endgeräts (24), das mit der ersten Netzwerkeinheit (10) verbunden ist, geschieht, bei der Anforderung des Terminal-Endgeräts (24) an die zweite Netzwerkeinheit (10) die erste Netzwerkeinheit (10) die zweite Netzwerkeinheit (10) über eine Default-Träger-Betriebsinformation des Terminal-Endgeräts (24) informiert.

16. Rechnerprogramm-Produkt, das einen Satz vom Rechner ausführbarer Anweisungen umfasst, die, wenn das Programm auf einem Terminal-Endgerät (24) ausgeführt wird, das Terminal-Endgerät (24) veranlassen, die folgenden Schritte auszuführen:
das Anfordern eines verbundenen Status bewirken, in dem das Terminal-Endgerät (24) kommunikativ mit einer Netzwerkeinheit (10) verbunden ist,
das Steuern eines Empfängers (26) des Terminal-Endgeräts (24), das in der Lage ist, über ein Medium unter Verwendung eines Default-Trägers mit der Netzwerkeinheit (10) zu kommunizieren, der von der Netzwerkeinheit (10) im verbundenen Status zugewiesen wird,
**dadurch gekennzeichnet, dass**
es das System veranlasst, ferner die folgenden Schritte auszuführen:
das Erzeugen einer Default-Träger-Betriebsinformation bewirken, die vom Empfänger (26) übertragen werden soll, wobei die Default-Träger-Betriebsinformation angibt, dass das Terminal-Endgerät (24) so angepasst ist, dass es ohne die Zuweisung eines Default-Trägers verbunden bleibt, und
den Empfänger (26) zu veranlassen, die Default-Träger-Betriebsinformation an die Netzwerkeinheit (10) zu übertragen,
wodurch im verbundenen Status die Erzeugung einer Trennungsanforderung veranlasst wird, die vom Empfänger (26) an die Netzwerkeinheit (10) übertragen werden soll, wobei die Trennungsanforderung die Freigabe des von der Netzwerkeinheit (10) zugewiesenen Default-Trägers angibt, während das Terminal-Endgerät (24) verbunden bleibt.

17. Rechnerprogramm-Produkt, das einen Satz vom Rechner ausführbarer Anweisungen umfasst, die, wenn das Programm auf einer Netzwerkeinheit (10) ausgeführt wird, die Netzwerkeinheit (10) veranlasst, die folgenden Schritte durchzuführen:
Steuern eines Empfängers (16) der Netzwerkeinheit (10), der in der Lage ist, mit einem Terminal-Endgerät (24) über ein Medium unter Verwendung eines Default-Trägers zu kommunizieren, der dem Terminal-Endgerät (24) in einem verbundenen Status zugewiesen wird,
in Reaktion auf ein Anforderungssignal des Terminal-Endgeräts (24), einen verbundenen Status des Terminal-Endgeräts (24) zu bewirken, wobei das Terminal-Endgerät (24) kommunikativ mit der Netzwerkeinheit (10) verbunden ist, und Zuweisen des Default-Trägers an das Terminal-Endgerät (24),
**dadurch gekennzeichnet, dass**
das Erkennen eines Empfangs einer Default-Träger-Betriebsinformation des Terminal-Endgeräts (24) durch den Empfänger (16), wobei die Default-Träger-Betriebsinformation angibt, dass das Terminal-Endgerät (24) angepasst ist, ohne die Zuweisung eines Default-Trägers verbunden zu bleiben,
im verbundenen Status Erkennen einer Trennungsanforderung, die vom Terminal-Endgerät (24) erhalten wird, und
in Reaktion darauf die Freigabe des Default-Trägers bewirkt, der dem verbundenen Terminal-Endgerät (24) zugewiesen wird, während das Terminal-Endgerät (24) verbunden bleibt.

18. Rechnerprogramm-Produkt, das einen Satz vom Rechner ausführbarer Anweisungen umfasst, die, wenn das Programm auf einem System ausgeführt wird, das eine erste Netzwerk-Einheit (10) und eine zweite Netzwerkeinheit (10) umfasst, die erste Netzwerkeinheit (10) veranlassen, die Schritte von Anspruch 14 durchzuführen, und ferner die erste Netzwerkeinheit (10) und die zweite Netzwerkeinheit (10) veranlassen, die folgenden Schritte durchzuführen:
sich kommunikativ miteinander zu verbinden;
wobei, wenn Mobilität eines an die erste Netzwerkeinheit (10) angeschlossenen Terminal-Endgeräts (24) geschieht, bei der Anforderung des Terminal-Endgeräts (24) an die zweite Netzwerkeinheit (10) die erste Netzwerkeinheit (10) die zweite Netzwerkeinheit (10) über eine Default-Träger-Betriebsinformation des Terminal-Endgeräts (24) informiert.

## Revendications

1. Dispositif de point d'extrémité de terminal (24), comprenant :
un module de commande (36) configuré pour
provoquer la demande d'un état rattaché, dans lequel le dispositif de point d'extrémité de terminal (24) est rattaché communicativement à une entité de réseau (10),
commander un émetteur-récepteur (26) qui est capable de communiquer avec l'entité de réseau (10) via un médium en utilisant un support par défaut alloué par l'entité de réseau (10) dans l'état rattaché,
**caractérisé en ce que**
le module de commande (36) est en outre configuré pour
provoquer la génération d'une information de fonctionnement de support par défaut à transmettre par l'émetteur-récepteur (26), l'information de fonctionnement de support par défaut indiquant que le dispositif de point d'extrémité de terminal (24) est adapté pour rester rattaché sans allocation de support par défaut,
amener l'émetteur-récepteur (26) à transmettre l'information de fonctionnement de support par défaut à l'entité de réseau (10), et,
dans l'état rattaché, provoquer la génération d'une demande de déconnexion à transmettre par l'émetteur-récepteur (26) à l'entité de réseau (10), la demande de déconnexion indiquant la libération du support par défaut alloué par l'entité de réseau (10) tout en maintenant le dispositif de point d'extrémité de terminal (24) rattaché.

2. Dispositif de point d'extrémité de terminal (24) selon la revendication 1, dans lequel le module de commande (36) est en outre configuré pour
maintenir l'état rattaché indépendant de la fourniture du support par défaut, lorsque la communication est inactive sans transfert de données dans l'état rattaché.

3. Dispositif de point d'extrémité de terminal (24) selon la revendication 1 ou 2, dans lequel le module de commande (36) est en outre configuré pour provoquer la génération d'un signal de demande de rattachement demandant l'état rattaché qui incorpore ladite information de fonctionnement de support par défaut.

4. Dispositif de point d'extrémité de terminal (24) selon l'une quelconque des revendications 1 à 3, dans lequel le module de commande (36) est en outre configuré pour
détecter si un support par défaut est requis en outre dans l'état rattaché, lorsque la communication est inactive sans transfert de données, et
provoquer la déconnexion de l'autre appareil (22) tout en maintenant rattaché.

5. Dispositif de point d'extrémité de terminal (24) selon l'une quelconque des revendications 1 à 3, dans lequel le module de commande (36) est configuré pour
provoquer la connexion à l'entité de réseau (10) pendant l'état rattaché.

6. Dispositif de point d'extrémité de terminal (24) selon l'une quelconque des revendications 2 à 5, dans lequel le module de commande (36) est en outre configuré pour
détecter la réception d'un conteneur de message par l'émetteur-récepteur (26),
provoquer l'ajout de l'information de fonctionnement de support par défaut au conteneur de message, et
amener l'émetteur-récepteur (26) à retransmettre le conteneur de message.

7. Entité de réseau (10), comprenant :
un module de commande (20) configuré pour
commander un émetteur-récepteur (16) qui est capable de communiquer avec un dispositif de point d'extrémité de terminal (24) via un médium en utilisant un support par défaut alloué au dispositif de point d'extrémité de terminal (24) dans un état rattaché,
en réponse à un signal de demande du dispositif de point d'extrémité de terminal (24), provoquer un état rattaché du dispositif de point d'extrémité de terminal (24), dans lequel le dispositif de point d'extrémité de terminal (24) est rattaché communicativement à l'entité de réseau (10) et allouer le support par défaut au dispositif de point d'extrémité de terminal (24),
**caractérisé en ce que**
le module de commande (20) est en outre configuré pour
détecter une réception d'une information de fonctionnement de support par défaut du dispositif de point d'extrémité de terminal (24) par l'émetteur-récepteur (16), dans laquelle l'information de fonctionnement de support par défaut indique que le dispositif de point d'extrémité de terminal (24) est adapté pour rester rattaché sans allocation de support par défaut,
dans l'état rattaché, détecter une demande de déconnexion reçue en provenance du dispositif de point d'extrémité de terminal, et en réponse à cela, provoquer la libération du support par défaut alloué au dispositif de point d'extrémité de terminal (24) tout en gardant le dispositif de point d'extrémité de terminal (24) rattaché.

8. Entité de réseau (10) selon la revendication 7, dans laquelle le module de commande (20) est en outre configuré pour,
en réponse à la détection de la réception de l'information de fonctionnement de support par défaut du dispositif de point d'extrémité de terminal (24), générer un signal d'accusé de réception de fonctionnement de support par défaut, et
amener l'émetteur-récepteur (16) à transmettre le signal d'accusé de réception de fonctionnement de support par défaut au dispositif de point d'extrémité de terminal (24).

9. Entité de réseau (10) selon la revendication 7 ou 8, dans laquelle le module de commande (20) est en outre configuré pour
détecter la réception d'un signal de demande de rattachement du dispositif de point d'extrémité de terminal (24), et
déterminer si le signal de demande de rattachement contient l'information de fonctionnement de support par défaut.

10. Entité de réseau (10) selon l'une quelconque des revendications 7 à 9, dans laquelle le module de commande (20) est en outre configuré pour
établir un support par défaut alloué au dispositif de point d'extrémité de terminal (24) lors de la détection d'un signal de demande de connectivité du dispositif de point d'extrémité de terminal (24) par l'émetteur-récepteur (16).

11. Système, comprenant :
une première entité de réseau (10) selon l'une quelconque des revendications 7 à 10,
une seconde entité de réseau (10),
dans lequel la première entité de réseau (10) et la seconde entité de réseau (10) sont connectées communicativement l'une à l'autre ;
dans lequel la première entité de réseau (10) est configurée pour, lorsqu'une mobilité d'un dispositif de point d'extrémité de terminal (24) rattaché à la première entité de réseau (10) se produit, lors de la demande du dispositif de point d'extrémité de terminal (24) à la seconde entité de réseau (10), informer la seconde entité de réseau (10) d'une information de fonctionnement de support par défaut du dispositif de point d'extrémité de terminal (24).

12. Système selon la revendication 11, dans lequel le module de commande (20) de la première entité de réseau (10), à laquelle est rattaché le dispositif de point d'extrémité de terminal (24), est configuré pour détecter si la seconde entité de réseau (10) est capable de détecter l'information de fonctionnement de support par défaut.

13. Procédé effectué par un dispositif de point d'extrémité de terminal (24), comprenant :
le fait de provoquer la demande d'un état rattaché, dans lequel le dispositif de point d'extrémité de terminal (24) est rattaché communicativement à une entité de réseau (10),
la commande d'un émetteur-récepteur (26) du dispositif de point d'extrémité de terminal (24) qui est capable de communiquer avec l'entité de réseau (10) via un médium en utilisant un support par défaut alloué par l'entité de réseau (10) dans l'état rattaché,
**caractérisé par**
le fait de provoquer la génération d'une information de fonctionnement de support par défaut à transmettre par l'émetteur-récepteur (26), l'information de fonctionnement de support par défaut indiquant que le dispositif de point d'extrémité de terminal (24) est adapté pour rester rattaché sans allocation de support par défaut, et
le fait d'amener l'émetteur-récepteur (26) à transmettre l'information de fonctionnement de support par défaut à l'entité de réseau (10),
dans l'état rattaché, le fait de provoquer la génération d'une demande de déconnexion à transmettre par l'émetteur-récepteur (26) à l'entité de réseau (10), la demande de déconnexion indiquant la libération du support par défaut alloué par l'entité de réseau (10) tout en maintenant le dispositif de point d'extrémité de terminal (24) rattaché.

14. Procédé effectué par une entité de réseau, comprenant :
la commande d'un émetteur-récepteur (16) de l'entité de réseau (10) qui est capable de communiquer avec un dispositif de point d'extrémité de terminal (24) via un médium en utilisant un support par défaut alloué au dispositif de point d'extrémité de terminal (24) dans un état rattaché,
en réponse à un signal de demande du dispositif de point d'extrémité de terminal (24), le fait de provoquer un état rattaché du dispositif de point d'extrémité de terminal (24), dans lequel le dispositif de point d'extrémité de terminal (24) est rattaché communicativement à l'entité de réseau (10) et l'allocation du support par défaut au dispositif de point d'extrémité de terminal (24),
**caractérisé par**
la détection d'une réception d'une information de fonctionnement de support par défaut du dispositif de point d'extrémité de terminal (24) par l'émetteur-récepteur (16), dans lequel l'information de fonctionnement de support par défaut indique que le dispositif de point d'extrémité de terminal (24) est adapté pour rester rattaché sans allocation de support par défaut,
dans l'état rattaché, la détection d'une demande de déconnexion reçue en provenance du dispositif de point d'extrémité de terminal (24), et
en réponse à cela, le fait de provoquer la libération du support par défaut alloué au dispositif de point d'extrémité de terminal (24) tout en gardant le dispositif de point d'extrémité de terminal (24) rattaché.

15. Procédé effectué par un système, comprenant :
une première entité de réseau (10) effectuant les étapes de la revendication 14 et une seconde entité de réseau (10),
dans lequel la première entité de réseau (10) et la seconde entité de réseau (10) sont connectées communicativement l'une à l'autre ;
dans lequel, lorsqu'une mobilité d'un dispositif de point d'extrémité de terminal (24) rattaché à la première entité de réseau (10) se produit, lors de la demande du dispositif de point d'extrémité de terminal (24) à la seconde entité de réseau (10), la première entité de réseau (10) informe la seconde entité de réseau (10) d'une information de fonctionnement de support par défaut du dispositif de point d'extrémité de terminal (24).

16. Produit de programme informatique, comprenant un ensemble d'instructions exécutables par ordinateur qui, lorsque le programme est exécuté sur un dispositif de point d'extrémité de terminal (24), amènent le dispositif de point d'extrémité de terminal (24) à effectuer les étapes consistant à :
provoquer la demande d'un état rattaché, dans lequel le dispositif de point d'extrémité de terminal (24) est rattaché communicativement à une entité de réseau (10),
commander un émetteur-récepteur (26) du dispositif de point d'extrémité de terminal (24) qui est capable de communiquer avec l'entité de réseau (10) via un médium en utilisant un support par défaut alloué par l'entité de réseau (10) dans l'état rattaché,
**caractérisé en ce que**
il amène le système à effectuer en outre les étapes consistant à
provoquer la génération d'une information de fonctionnement de support par défaut à transmettre par l'émetteur-récepteur (26), l'information de fonctionnement de support par défaut indiquant que le dispositif de point d'extrémité de terminal (24) est adapté pour rester rattaché sans allocation de support par défaut, et
amener l'émetteur-récepteur (26) à transmettre l'information de fonctionnement de support par défaut à l'entité de réseau (10),
dans l'état rattaché, provoquer la génération d'une demande de déconnexion à transmettre par l'émetteur-récepteur (26) à l'entité de réseau (10), la demande de déconnexion indiquant la libération du support par défaut alloué par l'entité de réseau (10) tout en maintenant le dispositif de point d'extrémité de terminal (24) rattaché.

17. Produit de programme informatique, comprenant un ensemble d'instructions exécutables par ordinateur qui, lorsque le programme est exécuté sur une entité de réseau (10), amènent l'entité de réseau (10) à effectuer les étapes consistant à :
commander un émetteur-récepteur (16) de l'entité de réseau (10) qui est capable de communiquer avec un dispositif de point d'extrémité de terminal (24) via un médium en utilisant un support par défaut alloué au dispositif de point d'extrémité de terminal (24) dans un état rattaché,
en réponse à un signal de demande du dispositif de point d'extrémité de terminal (24), provoquer un état rattaché du dispositif de point d'extrémité de terminal (24), dans lequel le dispositif de point d'extrémité de terminal (24) est rattaché communicativement à l'entité de réseau (10) et allouer le support par défaut au dispositif de point d'extrémité de terminal (24),
**caractérisé par**
la détection d'une réception d'une information de fonctionnement de support par défaut du dispositif de point d'extrémité de terminal (24) par l'émetteur-récepteur (16), dans lequel l'information de fonctionnement de support par défaut indique que le dispositif de point d'extrémité de terminal (24) est adapté pour rester rattaché sans allocation de support par défaut,
dans l'état rattaché, la détection d'une demande de déconnexion reçue en provenance du dispositif de point d'extrémité de terminal (24), et
en réponse à cela, le fait de provoquer la libération du support par défaut alloué au dispositif de point d'extrémité de terminal (24) tout en gardant le dispositif de point d'extrémité de terminal (24) rattaché.

18. Produit de programme informatique, comprenant un ensemble d'instructions exécutables par ordinateur qui, lorsque le programme est exécuté sur un système comprenant une première entité de réseau (10) et une seconde entité de réseau (10), amènent la première entité de réseau (10) à effectuer les étapes de la revendication 14 et amènent en outre la première entité de réseau (10) et la seconde entité de réseau (10) à effectuer les étapes consistant à :
se connecter communicativement l'une à l'autre ;
dans lequel, lorsqu'une mobilité d'un dispositif de point d'extrémité de terminal (24) rattaché à la première entité de réseau (10) se produit, lors de la demande du dispositif de point d'extrémité de terminal (24) à la seconde entité de réseau (10), amener la première entité de réseau (10) à informer la seconde entité de réseau (10) d'une information de fonctionnement de support par défaut du dispositif de point d'extrémité de terminal (24).
